**Europäisches Patentamt**

**European Patent Office**

**Office européen des brevets**

(19)

(11) Veröffentlichungsnummer: **0 048 416**
**B1**

(12) # EUROPÄISCHE PATENTSCHRIFT

(45) Veröffentlichungstag der Patentschrift:
**20.03.85**

(51) Int. Cl.⁴: **B 23 C 3/04**

(21) Anmeldenummer: **81107205.7**

(22) Anmeldetag: **12.09.81**

(54) **Vorrichtung zur Herstellung von Aussparungen an Rohren.**

(30) Priorität: **19.09.80 DE 8025115 U**

(43) Veröffentlichungstag der Anmeldung:
**31.03.82 Patentblatt 82/13**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**DE - B - 1 912 144**
**FR - A - 1 268 532**
**GB - A - 1 262 326**
**US - A - 3 370 491**

(73) Patentinhaber: **Hubert Eichele GmbH,**
**Schleusenstrasse 9, D-6000 Frankfurt am Main (DE)**

(72) Erfinder: **Eichele, Hubert, Schleusenstrasse 9,**
**D-6000 Frankfurt am Main (DE)**

(74) Vertreter: **Schaafhausen, Ludwig Richard, Dipl.-Phys. et**
**al, KEIL & SCHAAFHAUSEN Patentanwälte**
**Ammelburgstrasse 34, D-6000 Frankfurt am Main 1 (DE)**

## Beschreibung

Die Erfindung betrifft eine Vorrichtung zur Herstellung von Aussparungen an Rohren, wobei das Rohr von einem Spindelstock antreibbar ist, der mit einem mit geringer Drehzahl arbeitenden Hauptspindelantriebsmotor verbunden ist, und wobei als Werkzeug zur Erzeugung der Aussparungen mindestens eine senkrecht an dem Rohr angreifende Fräseinheit vorgesehen ist, deren Frässpindel von einem Antriebsmotor mit hoher Drehzahl antreibbar ist.

Derartige Rohre werden als sogenannte Manschettenrohre insbesondere in der Injektionstechnik zur Verfestigung und Abdichtung des Bodens verwendet. Die Rohre weisen in bestimmten Abständen Aussparungen auf, in denen Löcher zum Durchtritt der Injektionsflüssigkeit angeordnet sind. Über diese Aussparungen werden Gummimanschetten gezogen, so dass die mit Manschettengummis versehenen Rohre wie ein Ventil arbeiten.

Die an den Manschettenrohren vorgesehenen Aussparungen sind zur Arretierung der Manschettengummis erforderlich. Wären die Manschettengummis nicht in dem Rohr eingelassen, würden sie bei einer Einbringung der Rohre in ein zu verfestigendes Erdreich an der Wandung des Loches anstossen und sich derart verschieben, dass die in den Aussparungen vorgesehenen Löcher freigelegt würden. Damit würde das Manschettenrohr nicht mehr als Ventil arbeiten, weil die Injektionsmasse wieder zurückfliessen könnte.

Bei den bis in grosse Tiefen eingebrachten Manschettenrohren wird Injektionsmasse unter grossem Druck in das Erdreich gepumpt. Aufgrund dieses Druckes wird der Gummi aufgeblasen und die Injektionsmasse quillt heraus. Sobald der Druck nachlässt, setzt die Ventilwirkung ein, da die Gummimanschette in ihre ursprüngliche Stellung zurückkehrt und das Manschettenrohr abdichtet.

Diese in grossen Stückzahlen und in möglichst grossen Längen benötigten Manschettenrohre wurden bisher ausschliesslich auf langsam arbeitenden Drehbänken bearbeitet, da wegen der benötigten Breite der Aussparung von beispielsweise 80 mm ein Vorschub erforderlich ist. Durch die hohe Drehzahl des Hauptspindelantriebsmotors lassen sich mit herkömmlichen Drehbänken nur relativ kurze Manschettenrohre bearbeiten. Auch mit einer Vorrichtung, wie sie in der GB-A-1 262 326 beschrieben ist und aus der sämtliche Merkmale der eingangs beschriebenen Vorrichtung bekannt sind, werden nur relativ kurze Rohre bearbeitet, in die speziell gebildete Aussparungen eingebracht werden, die als Führung für eine Lampe eines Fotokopiergerätes dienen sollen.

Aufgabe der vorliegenden Erfindung ist es daher, eine Vorrichtung der eingangs genannten Art zu schaffen, mit der beliebig lange Rohre verarbeitet werden können, wobei die Vorrichtung einfach im Aufbau, leicht zu bedienen und darüber hinaus auch preisgünstig ist.

Diese Aufgabe wird dadurch gelöst, dass die jeweils auf einer Grundplatte angeordneten Fräseinheiten durch einfache Schraubklemmung an einer Flachstahlleiste miteinander verbunden sind, dass an der Unterseite einer jeden Grundplatte jeweils vier Lagergehäuse der Kugelbuchsen für eine aus zwei Stahlwellen bestehende Schlittenführung und die Stahlwellen der Schlittenführung fluchtend zum Spindelstock auf einem Maschinengestell angeordnet sind und dass als Vorschubeinheit ein am Maschinenende zwischen den Stahlwellen angeordneter Pneumatikzylinder vorgesehen ist, dessen Vorschubgeschwindigkeit über eine Pneumatikdrossel stufenlos regelbar ist.

Damit lassen sich rationell Manschettenrohre beliebiger Länge mit beliebigen Abständen der Aussparungen herstellen. Dadurch, dass das zu bearbeitende Rohr nur mit äusserst geringer Drehzahl rotiert, entstehen keine Lagerungsprobleme. Die Färseinheiten können in grösserer Anzahl gleichzeitig an unterschiedlichen Stellen an dem Rohr angreifen. Nach Herstellung der Aussparungen braucht das Rohr nur weitergeschoben zu werden und die Bearbeitung kann erneut beginnen.

Gemäss einer bevorzugten Ausgestaltung der Erfindung ist vorgesehen, dass der Hauptspindelantriebsmotor stufenlos regelbar ist und der Spindelstock über einen Kettentrieb mit dem Hauptspindelantriebsmotor in Antriebsverbindung steht. Damit wird ein kompakter und störungsunanfälliger Antrieb der Hauptspindel ermöglicht.

In Weiterbildung des Erfindungsgedankens ist vorgesehen, dass auf der Oberseite der Grundplatte Halterungen für eine Querführung der Fräseinheiten vorgesehen sind, dass als Querführung zwei Stahlwellen mit Gleitbuchsen vorgesehen sind, auf denen ein Querschlitten angeordnet ist, auf dem wiederum Lagerungen für die Frässpindeln und Konsolen für die Antriebsmotoren angeordnet sind, wobei die Spindelnasen der Frässpindeln so ausgebildet sind, dass Spannzangen zur Befestigung von Schaftfräsern direkt aufnehmbar sind. Durch diesen Aufbau benötigen die Fräseinheiten nur sehr wenig Platz und lassen sich auf der Grundplatte leicht auf das zu bearbeitende Rohr zu- und wieder wegbewegen.

Vorteilhafterweise sind die Querschlitten durch einen Pneumatikzylinder über einen Gelenkhebel bewegbar, wobei der Bewegungsweg der Pneumatikzylinder durch einen Trommelanschlag begrenzt ist.

In Weiterbildung des Erfindungsgedankens ist über einen Pneumatik-Endschalter am Ende der einstellbaren Einstichtiefe der Fräseinheit ein Pneumatik-Verzögerungsrelais schaltbar, um den Vorschub erst dann einsetzen zu lassen, wenn das Rohr mindestens eine volle Umdrehung gemacht hat. Damit wird erreicht, dass der Anfang des Rohreinstiches vollständig ausgefräst wird. Die Einstichtiefe lässt sich durch einen verstellbaren mechanischen Anschlag zusammen mit dem Pneumatik-Endschalter stufenlos einstellen.

In einer bevorzugten Ausgestaltung der Erfindung sind die Fräseinheiten mit pneumatisch betätigbaren Rollenlünetten versehen, die mit der Grundplatte verschraubt sind. Um das freie Ende abzustützen, weist die an dem dem Spindelstock abgewandten Ende des Maschinengestells angeordnete Fräseinheit vorteilhafterweise zwei Lünetteneinheiten auf.

Die Erfindung wird nachfolgend an einem Ausführungsbeispiel näher erläutert, das in der Zeichnung dargestellt ist.

Es zeigt:

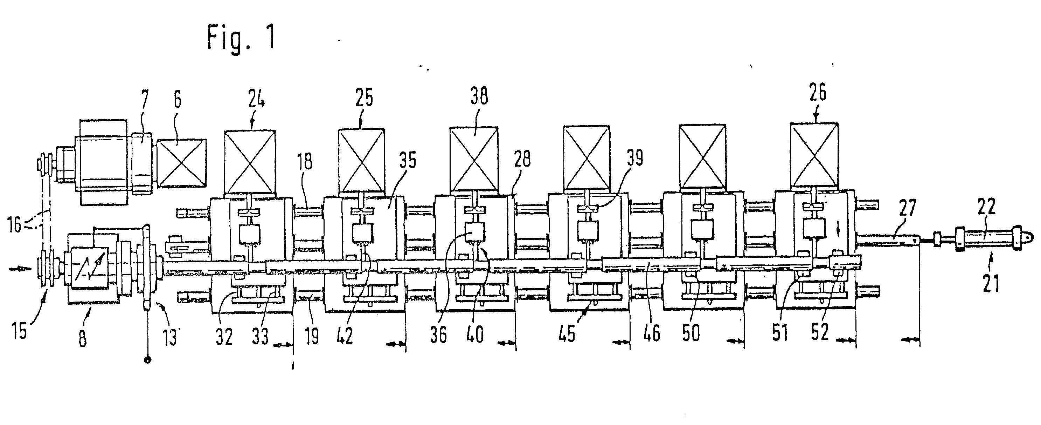

Fig. 1 eine Vorrichtung zur Herstellung von Aussparungen an Manschettenrohren für die Injektionstechnik in Draufsicht,

Fig. 2 in vergrösserter Darstellung eine Draufsicht auf den vorderen Teil der in Fig. 1 gezeigten Vorrichtung mit zwei Fräseinheiten,

Fig. 3 in vergrösserter Darstellung eine Draufsicht auf den hinteren Teil der in Fig. 1 gezeigten Vorrichtung mit der letzten Fräseinheit,

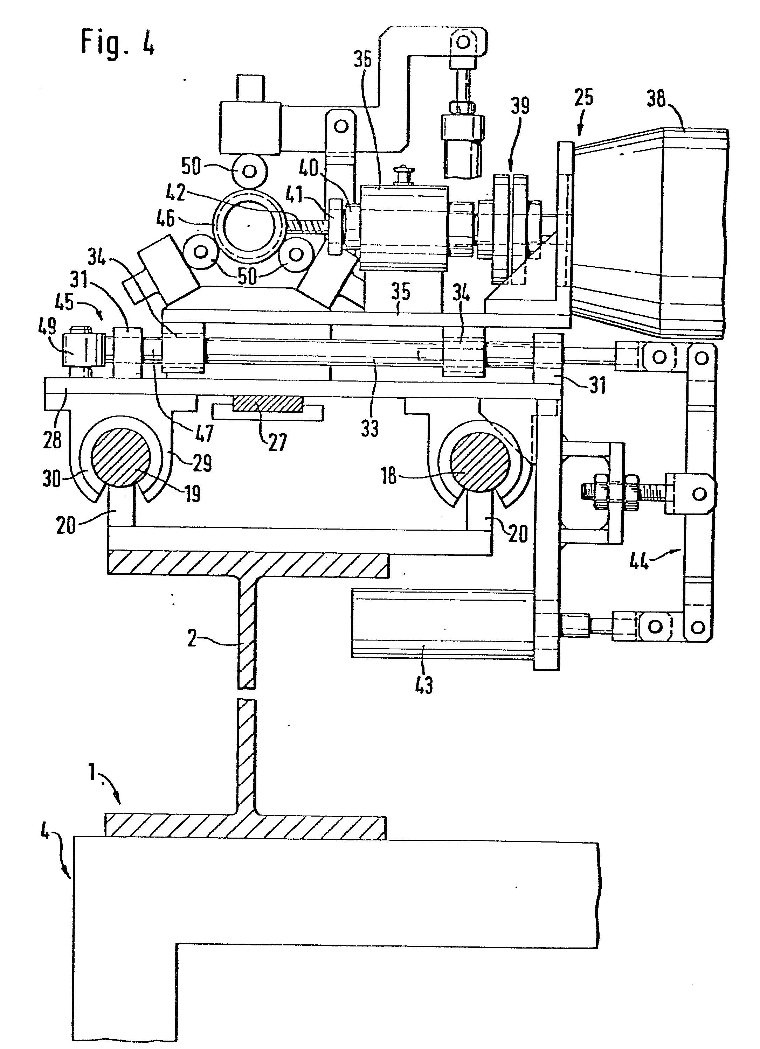

Fig. 4 einen Schnitt längs der Linie IV–IV in Fig. 2.

Die erfindungsgemässe Manschettenrohreinstichfräsmaschine ist auf einem Maschinengestell 1 angeordnet, das aus einem Breitflanschträger 2 und als Schweisskonstruktion ausgebildeten Maschinenfüssen 3, 4, 5 besteht.

Die beiden vorderen Maschinenfüsse 3, 4 sind zu einer Einheit verschweisst und dienen zur Befestigung des Hauptspindelantriebsmotors 6. Dieser ist über ein angeflanschtes Regelgetriebe 7 stufenlos regelbar. Die Hauptspindeldrehzahl beträgt zwischen 10 und 20 Umdrehungen pro Minute.

Der Spindelstock 8 besteht ebenfalls aus einer Schweisskonstruktion und ist mit einer Hohlspindel 9 versehen. Als Lagerung werden zwei spielfrei einstellbare Kegelrollenlager 10, 11 verwendet, die mit einer wartungsfreien Fettfüllung versehen und jeweils nach aussen durch Wellendichtringe abgedichtet sind.

An der Spindelnase 12 ist eine Spannzangeneinrichtung 13 durch sechs Stehbolzen 14 aufgeflanscht.

Der Antrieb der Spindel erfolgt über einen Kettentrieb 15, der aus einer zweifach Rollenkette 16 besteht, die durch ein Schutzblech 17 unfallsicher abgedeckt ist. Zur Kettenspannung ist der Antriebsmotor über vier Stehbolzen nach unten abgesteckt.

Als Schlittenführung sind zwei Stahlwellen 18, 19 vorgesehen, die bei 20 auf dem Breitflanschträger 2 abgestützt sind. Die als Führungswellen ausgebildeten Stahlwellen 18, 19 sind genau fluchtend zum Spindelstock 8 auf dem Maschinengestell 1 montiert.

Als Vorschubeinheit für die Schlittenführung ist ein am Ende des Maschinengestells 1 zwischen den Stahlwellen 18, 19 angeordneter Pneumatikzylinder 22 vorgesehen. Die Vorschubeinheit 21 ist mit der letzten Wellenabstützung schwenkbar verschraubt.

Der Ausgleichsbehälter 23 des Pneumatikzylinders 22 befindet sich zusammen mit einer Öldrossel an der Rückseite des Spindelstockes 8. Über diese Öldrossel lässt sich die Vorschubgeschwindigkeit stufenlos regeln.

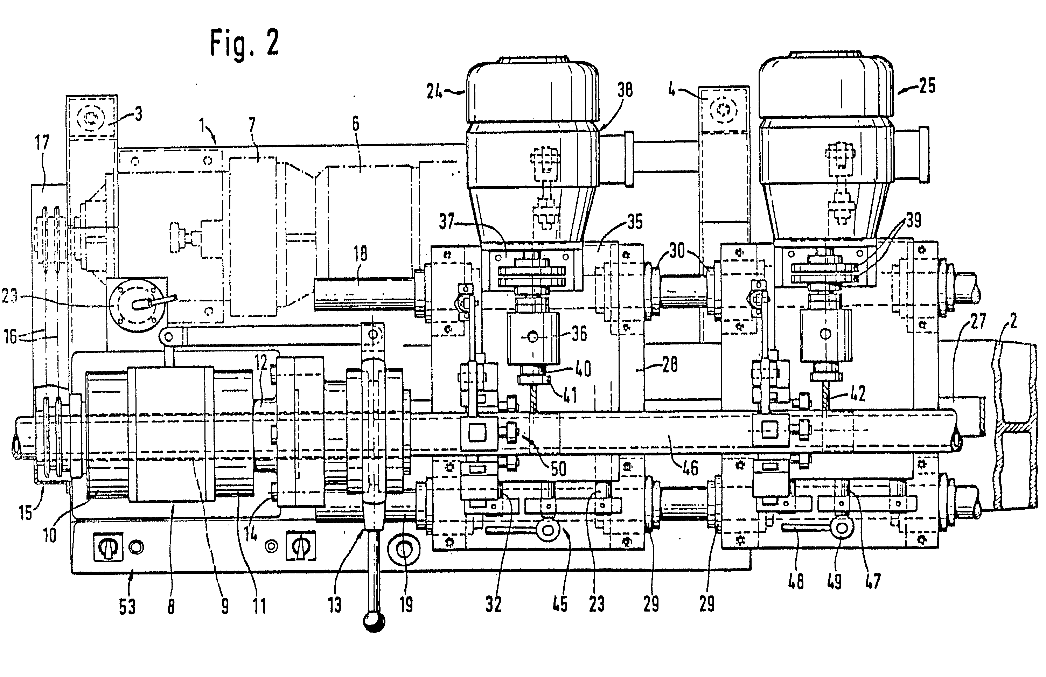

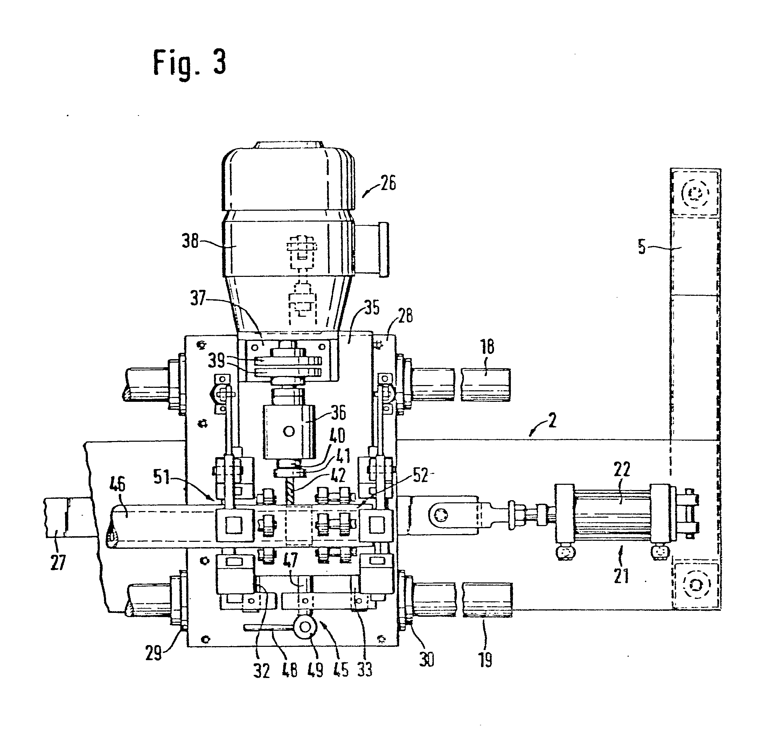

Die Gesamtvorrichtung zur Herstellung von Aussparungen an Manschettenrohren ist mit sechs Fräseinheiten ausgestattet, von denen die ersten beiden 24, 25 in Fig. 2 und die letzte 26 in Fig. 3 dargestellt sind. Diese Fräseinheiten 24, 25, 26 sind durch eine einfache Schraubklemmung über eine Flachstahlleiste 27 miteinander verbunden. Damit lassen sich die Abstände zwischen den Fräseinheiten 24, 25, 26 stufenlos verstellen.

Die Fräseinheiten 24, 25, 26 sind jeweils auf einer Grundplatte 28 angeordnet. An die Unterseite dieser Grundplatte 28 sind jeweils vier Lagergehäuse 29 der Kugelbuchsen 30 für die Längsführung entlang der Stahlwellen 18, 19 geschraubt.

Auf der Oberseite der Grundplatten 28 sind Halterungen 31 für die Querführung montiert. Für die Querführung sind zwei Stahlwellen 32, 33 mit dazu passenden Gleitbuchsen 34 vorgesehen. Auf diesen ist jeweils ein Querschlitten 35 angeordnet, auf denen eine Lagerung 36 für die Frässpindel und eine Konsole 37 für den Antriebsmotor 38 einer jeden Fräseinheit 24, 25, 26 aufgebaut ist.

Die Frässpindeln sind durch zwei in einem Ölbad laufende Kegelrollenlager gelagert und durch eine Ausgleichskupplung 39 mit den jeweiligen Antriebsmotoren 38 verbunden.

Diese arbeiten mit 2800 Umdrehungen pro Minute.

Die Spindelnasen 40 sind so konstruiert, dass Spannzangen 41 zur Befestigung von Schaftfräsern 42 direkt aufgenommen werden können.

Die Querschlitten 35 werden durch einen Pneumatikzylinder 43 über einen Gelenkhebel 44 bewegt. Der Pneumatikzylinder hat einen Hub von 25 mm. Die Bewegung des Querschlittens 35 wird durch einen Trommelanschlag für verschiedene Durchmesser der zu bearbeitenden Manschettenrohre 46 begrenzt. Die Trommelanschläge 45 sind an der Vorderseite der Vorrichtung montiert und bestehen aus einem Anschlagbolzen 47, der an einem mit einem Verstellhebel 48 versehenen Anschlagexenter 49 zur Anlage kommt.

Jede Fräseinheit 24, 25, 26 ist mit einer pneumatisch betätigten Rollenlünette 50 zur Führung des Manschettenrohres 46 versehen, wobei jede Lünette 50 mit der Grundplatte 28 verschraubt ist. Die in Fig. 3 dargestellte letzte Fräseinheit 26 ist mit zwei Lünetten 51, 52 ausgestattet, um das freie Ende des Manschettenrohres 46 abzustützen.

Sowohl die elektrische, als auch die pneumatische Steuerung der Vorrichtung ist in einem integrierten Schaltschrank unterhalb des Spindelstockes eingebaut.

Zur Herstellung von Aussparungen an Manschettenrohren für die Injektionstechnik wird ein Manschettenrohr 46 in den Spindelstock 8 bis zum Anschlag eingeschoben und mittels der Spannzangeneinrichtung 13 eingespannt.

Nach Betätigung eines Bedienungsknopfes am Armaturenbrett 53 werden die Lünetten 50, 51, 52 geschlossen. Die erste Lünette betätigt in Schliessstellung einen Pneumatik-Endschalter, der einen Druckschalter in Funktion setzt und sämtliche Motoren 6, 38 anlaufen lässt. Gleichzeitig bewegen sich die Querschlitten 35 in Richtung auf das Manschettenrohr 46 zu, bis die Bewegung durch die Trommelanschläge 45 begrenzt wird. Jeder Querschlitten 35 ist mit einem einstellbaren Pneumatik-Endschalter versehen, die in Reihe geschaltet sind.

Wenn alle Fräseinheiten 24, 25, 26, deren Vorschubgeschwindigkeiten über Pneumatik-Drosseln verändert werden können, ihre Endlage, d.h., Einstichtiefe erreicht haben, wird ein Pneumatik-Verzögerungsrelais geschaltet.

Das Pneumatik-Verzögerungsrelais hat die Aufgabe, den Vorschub erst dann einsetzen zu lassen, wenn das Manschettenrohr 46 mindestens eine volle Umdrehung gemacht hat. Dadurch wird erreicht, dass der Anfang des Manschettenrohreinstiches vollständig ausgefräst wird.

Die Einstichlänge kann durch einen verstellbaren mechanischen Anschlag, gekoppelt mit einem Pneumatik-Endschalter stufenlos eingestellt werden.

Nach Erreichen der eingestellten Einstichlänge wird über den Pneumatik-Endschalter ein zweites Verzögerungsrelais betätigt, das wiederum die Funktion hat, das Einstichende vollständig ausfräsen zu lassen.

Selbstverständlich können mit dem erfindungsgemässen Verfahren und der Vorrichtung nicht nur Aussparungen zur Aufnahme von Manschettengummis an Manschettenrohren hergestellt werden, sondern es können sowohl an Manschetten-, als auch an Aufsatzrohren die Zapfen zur Aufnahme von Muffen zur Verbindung zweier Rohre, insbesondere für die Injektionstechnik, hergestellt werden.

BEZUGSZEICHENLISTE

1 Maschinengestell
2 Breitflanschträger
3 Maschinenfuss
4 Maschinenfuss
5 Maschinenfuss
6 Hauptspindelantriebsmotor
7 Regelgetriebe
8 Spindelstock
9 Hohlspindel
10 Kegelrollenlager
11 Kegelrollenlager
12 Spindelnase
13 Spannzangeneinrichtung
14 Stehbolzen
15 Kettentrieb
16 Rollenkette
17 Schutzblech
18 Stahlwelle für Längsführung
19 Stahlwelle für Längsführung
20 Abstützung von 18 und 19
21 Vorschubeinheit
22 Pneumatikzylinder
23 Ausgleichsbehälter
24 erste Fräseinheit
25 zweite Fräseinheit

26 letzte Fräseinheit
27 Flachstahlleiste
28 Grundplatte
29 Lagergehäuse
30 Kugelbuchse
31 Halterungen
32 Stahlwelle für Querführung
33 Stahlwelle für Querführung
34 Gleitbuchse
35 Querschlitten
36 Frässpindellagerung
37 Konsole für 38
38 Antriebsmotor
39 Ausgleichskupplung
40 Spindelnase
41 Spannzange
42 Schaftfräser
43 Pneumatikzylinder für 35
44 Gelenkhebel
45 Trommelanschlag
46 Manschettenrohr
47 Anschlagbolzen
48 Verstellhebel
49 Anschlagexzenter
50 (Rollen-) Lünette
51 Lünette
52 Lünette
53 Armaturenbrett

**Patentansprüche**

1. Vorrichtung zur Herstellung von Aussparungen an Rohren, wobei das Rohr (46) von einem Spindelstock (8) antreibbar ist, der mit einem mit geringer Drehzahl arbeitenden Hauptspindelantriebsmotor (6) verbunden ist, und wobei als Werkzeug zur Erzeugung der Aussparungen mindestens eine senkrecht an dem Rohr (46) angreifende Fräseinheit (24, 25, 26) vorgesehen ist, deren Frässpindel von einem Antriebsmotor (38) mit hoher Drehzahl antreibbar ist, dadurch gekennzeichnet, dass die jeweils auf einer Grundplatte (28) angeordneten Fräseinheiten (24, 25, 26) durch einfache Schraubklemmung an einer Flachstahlleiste (27) miteinander verbunden sind, dass an der Unterseite einer jeden Grundplatte (28) jeweils vier Lagergehäuse (29) der Kugelbuchsen (30) für eine aus zwei Stahlwellen (18, 19) bestehende Schlittenführung und die Stahlwellen (18, 19) der Schlittenführung fluchtend zum Spindelstock (8) auf einem Maschinengestell (1) angeordnet sind und dass als Vorschubeinheit (21) ein am Maschinenende zwischen den Stahlwellen (18, 19) angeordneter Pneumatikzylinder (22) vorgesehen ist, dessen Vorschubgeschwindigkeit über eine Pneumatikdrossel stufenlos regelbar ist.

2. Vorrichtung nach Anspruch 1, dadurch gekennzeichnet, dass der Hauptspindelantriebsmotor (6) stufenlos regelbar ist und der Spindelstock (8) über einen Kettentrieb (15) mit dem Hauptspindelantriebsmotor (6) in Antriebsverbindung steht.

3. Vorrichtung nach Anspruch 1, dadurch gekennzeichnet, dass auf der Oberseite der Grundplatte (28) Halterungen (31) für eine Querführung der Fräseinheiten (24, 25, 26) vorgesehen sind, dass als Querführung zwei Stahlwellen (32, 33) mit Gleitbuchsen (34) vorgesehen sind, auf denen ein Querschlitten (35) angeordnet ist, auf dem wiederum Lagerungen (36) für die Frässpindeln und Konsolen (37) für die Antriebsmotoren (38) angeordnet sind, wobei die Spindelnasen (40) der Frässpindeln so ausgebildet sind, dass Spannzangen (41) zur Befestigung von Schaftfräsern (42) direkt aufnehmbar sind.

4. Vorrichtung nach Anspruch 3, dadurch gekennzeichnet, dass die Querschlitten (35) durch einen Pneumatikzylinder (43) über einen Gelenkhebel (44) bewegbar sind, wobei der Bewegungsweg der Pneumatikzylinder (43) durch einen Trommelanschlag (45) begrenzbar ist.

5. Vorrichtung nach Anspruch 4, dadurch gekennzeichnet, dass am Ende der einstellbaren Einstichtiefe der Fräseinheit (24, 25, 26) über einen Pneumatik-Endschalter ein Pneumatik-Verzögerungsrelais schaltbar ist, um den Vorschub erst dann einsetzen zu lassen, wenn das Rohr (26) mindestens eine volle Umdrehung gemacht hat, und dass die Einstechtiefe durch einen mechanischen Anschlag (49) und den Pneumatik-Endschalter stufenlos einstellbar ist.

6. Vorrichtung nach einem der vorhergehenden Ansprüche, dadurch gekennzeichnet, dass die Fräseinheiten (24, 25, 26) mit pneumatisch betätigbaren Rollenlünetten (50, 51, 52) versehen sind, die mit der Grundplatte (28) verschraubt sind, und dass die an den dem Spindelstock (8) abgewandten Ende des Maschinengestells angeordnete Fräseinheit (26) insbesondere zwei Lünetteneinheiten (51, 52) aufweist.

**Claims**

1. An apparatus for producing recesses on tubes, wherein tube (46) can be driven by a spindle head (8) connected to a master spindle driving tool (6) operating at a low speed, and wherein the tool for producing the recesses is at least one milling unit (24, 25, 26) perpendicularly engaging tube (46), with the milling spindle of the said milling unit being adapted to be driven by a driving motor (38) operating at a high speed, characterized in that the milling units (24, 25, 26) respectively disposed on a base plate (28) are interconnected by simple screw clamping to a flat steel bar (27), that disposed on the bottom side of each base plate (28) are reapectively four bearing housings (29) of taper bushings (30) for a carriage guide comprising two steel shafts (18, 19) and that disposed on a machine frame (1) in alignment with the spindle head (8) are the steel shafts (18, 19) of the carriage guide, and that feeder unit (21) is a pneumatic cylinder (22) disposed on the machine end between the steel shafts (18, 19), with the feed velocity of the feeder unit being infinitely variable through a pneumatic throttle.

2. An apparatus according to claim 1, characterized in that the master spindle driving motor (6) is infinitely variable, and the spindle head (8), via a chain drive (15), is in drive connection with the master spindle driving motor (6).

3. An apparatus according to claim 1, characterized in that provided on the upper side of the base plate (28) are mounts (31) for transversely guiding the milling units (24, 25, 62), that the transverse guide is formed of two steel shafts (32, 33) provided with sliding bushings (34) on which is disposed a transverse carriage (35) located on which, in turn, are bearings (36) for the milling spindles and knees (37) for the driving motors (38), with the spindle noses (40) of the milling spindles being so formed that collets (41) can be directly received for attaching of end mill cutters (42).

4. An apparatus according to claim 3, characterized in that the transverse carriages (35) are movable by a pneumatic cylinder (43) via a jointed lever (44), with the path of movement of the pneumatic cylinder (43) being adapted to be limited by a drum stop (45).

5. An apparatus according to claim 4, characterized in that a pneumatic time delay relay is operable at the end of the adjustable recess depth of the milling unit (24, 25, 26) via a pneumatic limit switch to cause the feed to start only after tube (26) having performed at least one full rotation, and that the recess depth is infinitely variable via a mechanical stop (49) and the pneumatic limit switch.

6. An apparatus according to any one of the preceding claims, characterized in that the milling units (24, 25, 26) are provided with pneumatically operable roller-type end supports (50, 51, 52) screwed to the base plate (28), and that the milling unit (26) disposed on the end of the machine frame facing away from spindle head (8) comprises preferably two end support units (51, 52).

**Revendications**

1. Appareil pour la fabrication de fenêtres aux tubes, le tube (46) étant actionnable par l'intermédiaire d'une poupée porte-fraise (8) reliée à un moteur de commande (6) de porte-fraise principale tournant d'une vitesse basse et l'outil pour fabriquer les fenêtres formant au moins un ensemble à fraiser (24, 25, 26) verticalement s'engageant le tube (46) la broche porte-fraise duquel étant actionnable par l'intermédiaire d'un moteur de commande (38) à vitesse haute, caractérisé en ce que les ensembles à fraiser (24, 25, 26) chaque fois pourvus sur une plaque de base (28) sont reliés l'un avec l'autre par l'intermédiaire de simple borne à vis à une barre (27) d'acier plat, que quatre boîtes de palier (29) des manchons à boule (30) pour un guidage de chariot comportant deux arbres d'acier (18, 19) sont disposées chaque fois au côté inférieur de chaque plaque de base (28) et les arbres d'acier (18, 19) du guidage de chariot sont disposés dans une manière alignante à la poupée porte-fraise (8) sur un support de machine (1), et qu'un cylindre pneumatique (22) disposé à l'extrémité de machine entre les arbres d'acier (18, 19) forme l'ensemble d'avance (21) la vitesse d'avancement duquel est réglables sans intervalles par l'intermédiaire d'un chapet d'étranglement pneumatique.

2. Appareil suivant la revendication 1, caractérisé en ce que le moteur de commande (6) de porte-fraise principale est réglable sans intervalles et la poupée porte-fraise (8) est en connexion d'entraînement avec le moteur de commande de porte-fraise principale (6) par l'intermédiaire d'une propulsion à chaîne.

3. Appareil suivant la revendication 1, caractérisé en ce que des attaches (31) pour une glissière transversale des ensembles à fraiser (24, 25, 26) sont pourvues sur la partie supérieure de la plaque de base (28), que deux arbres d'acier (32, 33) ayant des manchons coulissants (34) forment la glissière transversale, sur lesquels est disposé un coulisseau transversal (35), sur lequel, d'autre part, sont disposé des paliers (36) pour les broches porte-fraise et consoles (37) pour les moteurs de commande (38), les talons-broche (40) des broches porte-fraise étant formés ainsi que les pinces de serrage (41) pour attacher des fraises à queue (42) soient recevable directement.

4. Appareil suivant la revendication 3, caractérisé en ce que les coulisseaux transversals (35) sont manœuvrable par l'intermédiaire d'un cylindre pneumatique (43) via un levier articulé (44), le chemin de mouvement des cylindres pneumatiques (43) étant limitable par un arrêt-tambadour (45).

5. Appareil suivant la revendication 4, caractérisé en ce qu'un relais pneumatique à fonctionnement retardé est actionnable à l'extrémité de la profondeur de rainure réglable de l'ensemble à fraiser (24, 25, 26) par l'intermédiaire d'un interrupteur final pneumatique pour faire commencer l'avancement seulement après au moins une révolution de la tube (26) et que la profondeur de rainure est réglable sans inervalles par un arrêt (49) mécanique et l'interrupteur final pneumatique.

6. Appareil suivant une des revendications précédentes, caractérisé en ce que les ensembles à fraiser (24, 25, 26) sont pourvus de lunettes à rouleau (50, 51, 52) actionnables dans une manière pneumatique et serrés à vis à la plaque de base (28), et que l'ensemble à fraiser (26) disposé à l'extrémité de bâti de machine détournée de la poupée porte-fraise (8) préférablement comporte deux ensembles de lunette (51, 52).

Fig. 1

Fig. 2

0 048 416

# Fig. 3

# Fig. 4